# FASCICULE DE BREVET EUROPEEN

(11) **EP 2 585 283 B1**
(45) Date de publication et mention de la délivrance du brevet: **26.11.2014**
(21) Numéro de dépôt: 11736426.5
(22) Date de dépôt: 22.06.2011
(51) Int. Cl.: B29C 70/46, B29C 70/54, F04D 29/52, B29L 31/00, B29C 33/22

(54) **PROCEDE DE FABRICATION D'UN ARTICLE EN MATERIAU COMPOSITE**
METHODE ZUR HERSTELLUNG EINES ARTIKELS AUS EINEM VERBUNDWERKSTOFF
METHOD FOR MANUFACTURING AN ARTICLE MADE OF COMPOSITE MATERIAL

(30) Priorité: 25.06.2010 FR 1055128
(43) Date de publication de la demande: 01.05.2013
(73) Titulaire: Snecma, 75015 Paris (FR)
(72) Inventeur: GUMMEL, Micah, East Kingston, New Hampshire 03827 (US); MARCHAL, Yann, Portsmouth, New Hampshire 03801 (US); PHELIPPEAU, Antoine, Portsmouth, New Hampshire 03801 (US)
(74) Mandataire: Gevers France
(86) Numéro de dépôt international: PCT/FR2011/051439
(87) Numéro de publication internationale: WO 2011/161380

(56) Documents cités:
- EP-A1- 1 674 244
- EP-A1- 2 077 183
- GB-A- 2 243 104
- US-A- 5 009 687

## Description

La présente invention concerne le domaine des matériaux composites comprenant une matrice polymère renforcée par une structure fibreuse et plus particulièrement l'utilisation de ces matériaux dans la fabrication de pièces aéronautiques ou de turbomachines.

Dans le domaine aéronautique, on cherche à réduire la masse des composants des moteurs tout en maintenant à un haut niveau leurs propriétés mécaniques. Dans un turbomoteur multi flux, le carter de soufflante définissant le contour de la veine d'air entrant dans le moteur et à l'intérieur duquel est logé le rotor de la soufflante est réalisé maintenant en matériau composite. Il comprend une virole pourvue en amont et en aval de brides externes, radiales et transversales, pour la liaison et le montage à d'autres composants du moteur, notamment le profil d'entrée d'air à l'amont et le carter intermédiaire à l'aval. Le carter supporte divers éléments et doit pouvoir retenir les objets résultant d'une rupture d'aube de soufflante.

Un mode de fabrication d'une pièce comme un carter de soufflante en matériau composite comprend la mise en place d'une structure fibreuse sur un mandrin dont le profil correspond à celui de la pièce à réaliser. Le renfort fibreux peut être réalisé, par exemple, par tissage tridimensionnel avec épaisseur évolutive comme cela est décrit dans le brevet EP 1 961 923 au nom de la demanderesse. Le renfort fibreux constitue une préforme fibreuse tubulaire formant une seule pièce avec des parties de renfort correspondant aux brides du carter. La fabrication se poursuit par la compaction et l'imprégnation de la structure par une résine et la polymérisation de cette dernière pour obtenir la pièce.

Le document EP 1 674 244 A1 décrit un procédé de fabrication d'un article en matériau composite selon le préambule de la revendication 1.

L'invention concerne le mode de fabrication où l'imprégnation du renfort fibreux est réalisée par le procédé d'injection RTM, qui est le sigle de Resin Transfert Moulding. Selon ce procédé, on enferme la structure fibreuse en la compactant dans un moule rigide de géométrie figée dont la forme correspond à la pièce que l'on souhaite obtenir et on injecte la résine à l'intérieur du moule après y avoir fait le vide le cas échéant. Le moule comprend une première partie formant support de la structure fibreuse et un contre moule que l'on vient déposer sur la structure fibreuse. On compacte la structure en rapprochant les parois des deux parties de moule.

Le taux de fibres est un paramètre important pour la conception d'une pièce de ce type. En particulier pour une pièce telle qu'un carter ayant une veine conique et des brides intégrées il est important que le taux de fibres soit élevé aussi bien dans la zone de veine que dans les brides. Ainsi, il est nécessaire d'appliquer des efforts de compaction d'orientations différentes selon les zones de la pièce sans pour autant gêner la fermeture du moule et dégrader l'intégrité des renforts fibreux.

Les conceptions de moules d'injection de l'art antérieur, pour ce type de pièce, ne permettent pas d'appliquer des efforts de compaction satisfaisants dans les zones de brides. En effet, un contre moule formé d'une seule pièce est déplacé selon une direction perpendiculaire à la surface principale du support et toutes les parties du support ne sont donc pas orientées favorablement par rapport à la direction du déplacement. Il s'ensuit une disposition finale des fibres dans ces zones qui n'est pas optimale du point de vue de la résistance mécanique.

### EXPOSE DE L'INVENTION

L'invention a pour objectif un procédé de fabrication d'une pièce cylindrique, présentant des brides orientées radialement, permettant de concilier l'exigence d'un taux de fibres le plus élevé possible résultant d'une compaction de la structure fibreuse et d'une orientation optimale des fibres.

On parvient à réaliser cet objectif avec un procédé de fabrication d'un article en matériau composite formé d'une matrice polymère renforcée par une structure fibreuse, comprenant les étapes de mise en place de la structure fibreuse sur un support formant une surface de moulage, de recouvrement par un contre moule et de compaction de ladite structure par rapprochement de la surface du contre moule avec celle du support, puis d'injection de la matrice polymère dans la structure fibreuse, caractérisé par le fait que, le support comprenant une partie cylindrique et une paroi orientée radialement par rapport à la partie cylindrique, le contre moule comprend deux parties mobiles l'une par rapport à l'autre que l'on déplace en direction respectivement l'une de l'axe de la partie cylindrique et l'autre de ladite paroi radiale.

Le procédé de l'invention présente l'avantage de pouvoir placer et compacter les fibres de façon conforme à l'attendu final.

Dans la mesure où l'orientation des fibres est optimale dans l'enceinte du moule, le procédé présente également l'avantage de réaliser l'imprégnation de résine dans cette configuration figée.

Un avantage supplémentaire est d'avoir la possibilité de sécher à la forme finale, si le renfort fibreux le nécessite. Dans le cadre d'une préforme en fibre de carbone notamment, il est nécessaire d'injecter la préforme à l'état sec. D'une part l'étape de tissage implique une humidification des fibres. D'autre part la compaction de la préforme dans le moule, jusqu'à atteindre la géométrie finale, objet de la présente demande, se fait plus facilement avec une préforme humidifiée. La méthode usuelle de séchage pour un tel type de préforme est de sécher sous bâche à vide. L'inconvénient majeur est que cette méthode ne compacte pas la préforme jusqu'à la géométrie finale, ce de façon hétérogène, et induit des flambages de la préforme. Ainsi, l'invention proposée permet-elle de compacter la préforme jusqu'à la géométrie désirée avec un matériau dans l'état optimal pour être compacté, c'est-à-dire humide. Ensuite l'étape nécessaire de séchage est effectuée sans risque pour l'intégrité structurale de la préforme.

Enfin la géométrie des rayons de raccordement entre la veine et les brides est également assurée par ce procédé.

Conformément à un mode de réalisation, le contre moule comprend une partie principale de forme complémentaire à celle de la partie cylindrique du support et un coin avec une première paroi, de forme complémentaire à celle de ladite paroi radiale, s'interposant entre ladite partie principale du contre moule et ladite paroi radiale du support, le contre moule et le coin étant agencés pour que le coin se déplace perpendiculairement en direction de ladite paroi radiale du support quand le contre moule est déplacé en direction de la partie cylindrique.

Plus précisément, le coin présente une deuxième paroi de forme complémentaire à la portion de paroi de la partie cylindrique qui est adjacente à celle de ladite paroi radiale, et, avantageusement, le coin présente une portion de paroi à section arrondie entre lesdites première et deuxième parois.

De manière à faciliter la mise en oeuvre du procédé, on dispose une feuille métallique sous ladite deuxième paroi du coin de manière à améliorer le glissement du coin sur la structure fibreuse.

Conformément à une caractéristique, la partie centrale du contre moule comprenant une portion de paroi inclinée par rapport audit axe, le coin comprenant une troisième paroi inclinée par rapport audit axe, lesdites portions de paroi viennent en contact l'une avec l'autre de manière à assurer le glissement du coin en direction de ladite paroi radiale quand le contre moule est déplacé en direction de la partie cylindrique.

Plus particulièrement, le contre moule est formé d'au moins deux secteurs de cylindre. Conformément à la forme préférée de réalisation le support comprend une partie cylindrique et deux parois orientées radialement de part et d'autre de la partie cylindrique. Ces deux dernières parois constituent les brides du carter.

Le contre moule est rapproché de la surface du moule de manière jusqu'à compacter la structure fibreuse et réduire l'épaisseur de cette dernière aussi bien dans la direction radiale par rapport à l'axe de la partie cylindrique que perpendiculairement à la surface du support après mise en place du contre moule.

Le procédé est appliqué notamment à la fabrication d'un carter de turbomachine.

### BREVE DESCRIPTION DES FIGURES

D'autres caractéristiques et avantages de l'invention ressortiront à la lecture de la description qui suit, en référence aux figures annexées qui représentent, respectivement :
- la figure 1, une vue schématique en coupe axiale d'un moteur à turbine à gaz à soufflante avant ;
- la figure 2, une vue en demi coupe axiale d'un moule de fabrication d'un carter de soufflante ;

La figure 3 une vue de face du moule en coupe selon la direction III-III de la figure 2 ;
La figure 4 une vue en perspective d'un élément en coin du contre moule.

### DESCRIPTION DETAILLEE D'UN EXEMPLE DE REALISATION

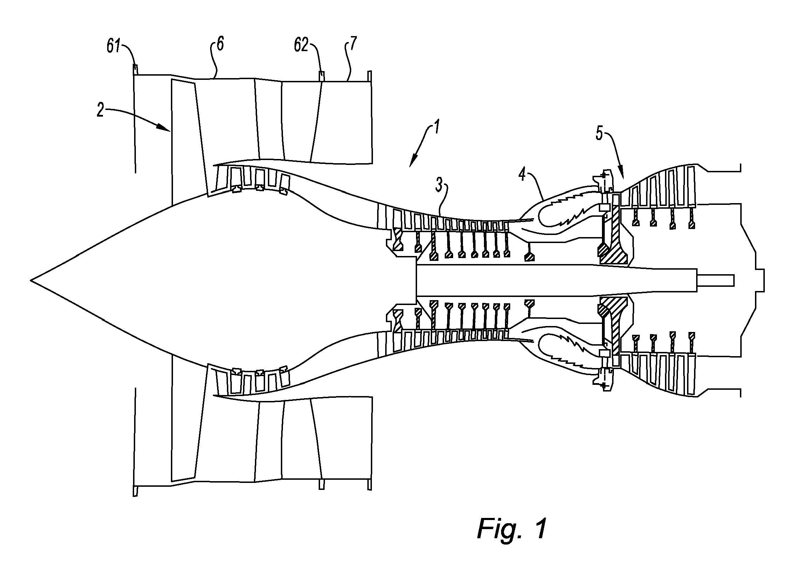

L'invention est appliquée à la fabrication d'un carter de soufflante de turboréacteur à double flux dont un exemple est représenté schématiquement sur la figure 1. Le moteur comprend de l'amont vers l'aval dans le sens de l'écoulement des gaz, une soufflante avant 2 en entrée de moteur, un compresseur de gavage, un compresseur HP 3; une chambre de combustion 4, et les turbines haute et basse pression 5. La soufflante 2 est entraînée par la turbine BP en rotation à l'intérieur d'un carter de soufflante 6. Le carter de soufflante définit le volume d'air entrant dans le moteur. Une partie de cet air, constituant le flux primaire, est guidée à l'intérieur du moteur où il est comprimé successivement par le compresseur de gavage et le compresseur HP. Il alimente la chambre de combustion 4 où son énergie est augmentée par la combustion du carburant. Les gaz produits sont détendus dans les étages successifs de turbine 5 puis éjectés. L'autre partie de l'air constitue le flux secondaire qui est éjecté dans l'atmosphère directement ou après mélange avec le flux primaire selon l'application du moteur. Le moteur est représenté sans la nacelle qui l'enveloppe. Le carter de soufflante 6 est de forme cylindrique sensiblement tronconique avec deux brides l'une à l'amont 61 et l'autre à l'ava 62. La bride amont 61 comprend des moyens d'attache du carénage d'entrée d'air qui n'est représenté. La bride aval relie le carter au carter structural 7 que l'on désigne carter intermédiaire.

Ce carter est avantageusement réalisé en matériau composite à renfort fibreux densifié par une matrice. Le matériau fibreux est par exemple en carbone, verre aramide ou autre et la matrice est en polymère tel qu'un époxyde, un bis maléimide ou polyimide.

Le renfort fibreux est formé par enroulement sur un mandrin d'une texture fibreuse.

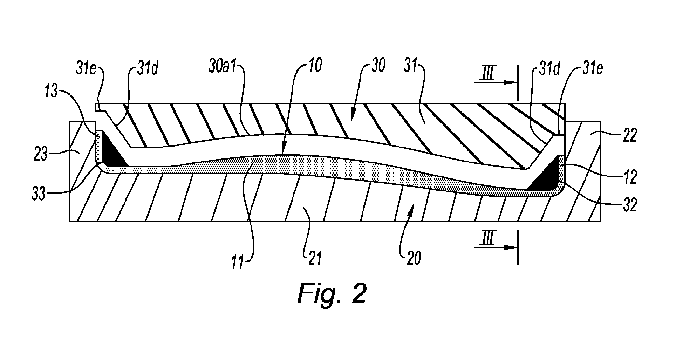

On a représenté sur la figure 2 un exemple de dispositif de moulage du carter. Un support 20 présente une surface annulaire externe de même profil que la pièce à réaliser, à savoir ici la surface interne du carter de soufflante. Ce support comprend une partie cylindrique 21 en forme de mandrin et est pourvu de deux flasques transversaux 22 et 23 conformés de manière à permettre la réalisation des brides du carter. Dans le cadre du procédé on met en place le renfort fibreux autour du mandrin de manière à réaliser une préforme 10. Le mode de réalisation de la préforme n'est pas limitatif. Elle peut être réalisée par enroulement de nappes distinctes, superposées jusqu'à obtenir l'épaisseur souhaitée ou bien par enroulement d'une nappe en plusieurs spires. Les nappes peuvent avoir été tressées ou bien tissées ; la préforme peut aussi être réalisée par enfilement d'une chaussette, tressée ou tissée, autour du mandrin ou encore par enroulement de filaments autour du mandrin.

La préforme 10 comprend une partie centrale 11, dont l'épaisseur n'a pas à être constante sur toute sa longueur, notamment des surépaisseurs sont prévues sur la partie le long de l'axe qui vient au droit de la surface balayée par les aubes de la soufflante. Ces surépaisseurs permettent de constituer un renfort susceptible d'absorber les chocs par des débris ou autres objets qui résulteraient de la rupture d'aubes. La préforme s'étend également le long des deux flasques terminaux en deux portions radiales 12 et 13 pour constituer les brides.

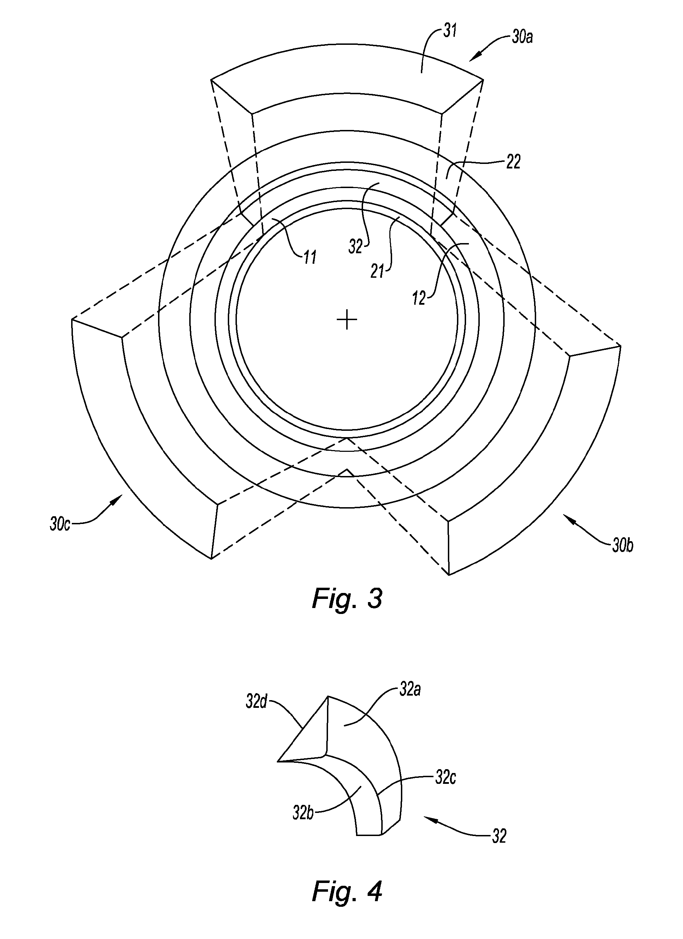

La fabrication de la pièce se poursuit par la mise en place d'un contre moule 30 sur la préforme de manière à constituer un volume dans lequel on vient injecter le polymère de la matrice avec l'assistance le cas échéant d'une source de vide. Dans l'exemple ce contre moule est en trois parties 30a, 30b et 30c, comme on le voit sur la figure 3; la face interne du contre moule 30a1, 30b1 et 30c1 respectivement est conformée selon la forme à donner à la surface externe de la pièce. Chacune des parties vient se loger entre les deux flasques d'extrémité 22 et 23. Quand les trois parties sont en place elles ménagent un volume fermé avec le mandrin 21 et les deux flasques 22 et 23.

Comme on le voit sur la figure 2, le profil axial interne de chaque élément de contre moule comprend un partie centrale 31 correspondant à la partie centrale 11 de la préforme et deux parties d'extrémités qui viennent en appui contre les parties radiales d'extrémité de la préforme.

En raison du foisonnement des fibres, il existe un vide interstitiel qui est occupé par la matrice au moment de l'injection du polymère. Cependant le taux de fibres dans la pièce finie est un paramètre de premier ordre pour la résistance mécanique de cette dernière. La porosité de la préforme doit donc être maîtrisée et contenue dans certaines limites.

Pour cette raison il est nécessaire de compacter la structure fibreuse que constitue la préforme. Un simple rapprochement radial des éléments du contre moule en direction de la préforme permettrait une réduction d'épaisseur de la partie centrale mais les portions d'extrémité 12 et 13 ne seraient pas convenablement comprimées. Par le glissement des surfaces entre elles il se formerait des bourrelets ou des plis. Pour résoudre ce problème on a disposé deux éléments de contre moule en forme de coin 32 et 33 dans la zone de la préforme située à proximité des portions radiales 12 et 13.

Chaque élément de contre moule à section en forme de coin, s'étend sur un arc de cercle avec l'élément de contre moule auquel il est adjoint. Il y a dans l'exemple de la figure 3, trois éléments en forme de coin associés respectivement aux éléments 30a, 30b 30c de contre moule. Chaque coin 32 ou 33 comprend une première paroi 32a, 33a respectivement faisant face à la portion radiale 12, 13 de la préforme. Il comprend aussi une deuxième portion de paroi 32b, 33b, cylindrique perpendiculaire à la première paroi 32a, 33a et faisant face à la bande de la partie centrale 11 de la préforme 10, adjacente à la portion radiale 12, 13. Les deux parois 32a et 32b, 33a et 33b sont reliées par une portion de paroi à section arrondie, en arc de cercle de préférence, 32c, 33c respectivement. Les deux, première et deuxième, parois se referment sur une troisième paroi 32d, 33d. Cette paroi est à section rectiligne en forme de portion de tronc de cône.

Sur l'élément de contre moule 30 adjacent à l'élément de coin, la partie centrale 31 est raccordée à deux portions de surface, de part et d'autre, 31 d en forme de tronc de cône, chacun respectivement parallèle à la portion de surface 32d, 33d de l'élément de coin adjacent 32 ou 33. Enfin le contre moule se termine de chaque coté par une portion de paroi 31 e en forme de portion de cylindre de même axe que celui du support 20 et de rayon égal à celui de la bride à réaliser sa longueur est aussi égale à l'épaisseur de la bride à réaliser.

Les différentes parties sont agencées de telle manière que lorsque le contre moule est en position de fermeture du moule, il ménage avec la partie cylindrique 21, une épaisseur déterminée de la préforme mesurée radialement. En se rapprochant, les surfaces 31 d viennent en appui contre les troisièmes parois des éléments en coin 32 et 33 ; puis, quand le déplacement du contre moule se poursuit, un effort d'appui est exercé par les surfaces 31 d sur les troisièmes parois 32d et 33d. Cet effort comprend une composante radiale et une composante axiale qui conduisent au déplacement des coins 32 et 33 et à une réduction de l'épaisseur de la préforme dans les zones de contact des coins avec la préforme. En particulier l'effort axial exercé par la première paroi 32a e 33a est orienté perpendiculairement à la portion radiale, 12 et 13 respectivement, de la préforme. Afin de rendre plus aisé le déplacement des éléments de coins à la surface de la partie cylindrique de la préforme et éviter tout arrachement éventuel, on dispose des feuilles métalliques minces entre le coin et la préforme. Le glissement est ainsi assuré sans endommagement de celle-ci. La feuille métallique peut être enlevée ensuite. Dans la position de fermeture du moule, les surfaces 31 d du contre moule sont en contact avec les surfaces 32d, respectivement 33d, des éléments en coin 32 et 33 et le coin est écarté de la paroi du flasque de la distance déterminée par la longueur axiale de la portion de paroi cylindrique 31 e du contre moule.

En résumé, la fabrication d'une pièce cylindrique avec bride comprend les étapes suivantes. On met en place une préforme formée de fibres sur un support 20 cylindrique dont le profil est celui de l'intérieur de la pièce à fabriquer. La préforme n'est pas comprimée, la structure fibreuse est foisonnante. Ce support comprend des flasques en extrémité pour le moulage des brides. On dispose un contre moule 30 en plusieurs éléments en arc de cercle, au moins deux éléments en demi cercle, autour de la préforme 10. Ce contre moule comprend des éléments en forme de coin 32 et 33 de part et d'autre d'une partie cylindrique centrale 31. On rapproche le contre moule du support qui vient appuyer par les faces en biais contre les coins et les entraîne dans un mouvement à la fois radial vers l'axe du cylindre et axial en direction des flaques. Lorsque le contre moule est en place l'épaisseur de la paroi de la préforme a été réduite sans bourrelet ni pli non souhaité. On boulonne les éléments entre eux pour éviter un éclatement au moment de l'injection de la matrice.

On procède ensuite à l'injection du polymère constituant la matrice avec l'assistance éventuelle de vide. Une fois la polymérisation effectuée on démoule la pièce et on procède aux opérations de finition.

## Revendications

1. Procédé de fabrication d'un article en matériau composite formé d'une matrice polymère renforcée par une structure fibreuse, comprenant les étapes de mise en place de la structure fibreuse (10) sur un support (20) formant une surface de moulage, de recouvrement par un contre moule (30) et de compaction de ladite structure par rapprochement de la surface du contre moule avec celle du support, puis d'injection de la matrice polymère dans la structure fibreuse, le support (20) comprenant une partie cylindrique (21) et une paroi (22, 23) orientée radialement par rapport à la partie cylindrique (21), **caractérisé par le fait que** le contre moule comprend deux parties mobiles (31, 32 ou 33) l'une par rapport à l'autre que l'on déplace en direction respectivement l'une de l'axe de la partie cylindrique (21) et l'autre de la paroi radiale (22, 23) du support (20) pendant l'étape de compaction avant injection de la matrice polymère.

2. Procédé selon la revendication 1 selon lequel le contre moule (30) comprend une partie principale (31) de forme complémentaire à celle de la partie cylindrique (21) du support (20) et un coin (32, 33) avec une première paroi (32a, 33a) de forme complémentaire à celle de la paroi radiale ( 22, 23) s'interposant entre ladite partie principale (31) du contre moule et ladite paroi radiale (22, 23) du support (20), le contre moule (30) et le coin (32, 33) étant agencés pour que le coin se déplace perpendiculairement en direction de ladite paroi radiale (22, 23) du support (20) quand le contre moule (30) est déplacé en direction de la partie cylindrique (21)

3. Procédé selon la revendication 2, dont le coin (32, 33) présente une deuxième paroi (32b, 33b) de forme complémentaire à la portion de paroi du support de la partie cylindrique (21) adjacente à celle de ladite paroi radiale (22, 23).

4. Procédé selon la revendication 2 ou 3 dont le coin présente une portion de paroi (32c, 33c) à section arrondie entre lesdites première (32a, 33a) et deuxième (32b, 33b) parois.

5. Procédé selon la revendication 3 selon lequel on dispose une feuille métallique (40) sous ladite deuxième paroi de manière à améliorer le glissement du coin sur la structure fibreuse.

6. Procédé selon la revendication 4, la partie centrale (31) du contre moule comprenant une portion de paroi (31 a) inclinée par rapport audit axe, le coin (32, 33) comprenant une troisième paroi (32d, 33d) inclinée par rapport audit axe, lesdites portions de paroi (31a ; 32d, 33d) venant en contact l'une avec l'autre de manière à assurer le glissement du coin en direction de ladite paroi radiale quand le contre moule est déplacé en direction de la partie cylindrique.

7. Procédé, selon l'une des revendications précédentes, dont le contre moule est formé d'au moins deux secteurs de cylindre.

8. Procédé selon l'une des revendications précédentes dont le support comprend une partie cylindrique et deux parois orientées radialement de part et d'autre de la partie cylindrique.

9. Procédé selon l'une des revendications précédentes selon lequel le contre moule est rapproché de la surface du moule de manière à compacter la structure fibreuse et réduire l'épaisseur de cette dernière aussi bien perpendiculairement à la surface du support qu'à celle des flasques latéraux.

10. Procédé selon l'une des revendications précédentes, appliqué à la fabrication d'un carter de turbomachine.

## Patentansprüche

1. Herstellungsverfahren eines Artikels aus Verbundwerkstoff, der aus einer Matrix aus Polymer, die mit einer Faserstruktur verstärkt ist, besteht, das die Schritte des Anbringens der Faserstruktur (10) auf einem Träger (20), der eine Oberfläche zum Formen, Abdecken durch eine Gegenform (30) und Kompaktieren der Struktur durch Annähern der Oberfläche der Gegenform mit der des Trägers bildet, danach Einspritzen der Polymermatrix in die Faserstruktur umfasst, wobei der Träger (20) einen zylindrischen Teil (21) und eine Wand (22, 23) umfasst, die radial in Bezug auf den zylindrischen Teil (21) ausgerichtet ist, **dadurch gekennzeichnet, dass**
die Gegenform zwei zueinander bewegliche Teile (31, 32 oder 33) umfasst, die man eine jeweils in Richtung der Achse des zylindrischen Teils (21) und die andere des radialen Teils (22, 23) des Trägers (20) während des Kompaktierungsschritts vor dem Einspritzen der Polymermatrix verlagert.

2. Verfahren nach Anspruch 1, bei dem die Gegenform (30) einen Hauptteil (31) mit komplementärer Form zu der des zylindrischen Teils (21) des Trägers (20) umfasst, und einen Keil (32, 33) mit einer ersten Wand (32a, 33a) mit komplementärer Form zu der der radialen Wand (22, 23), die sich zwischen den Hauptteil (31) der Gegenform und die radiale Wand (22, 23) des Trägers (20) einfügt, wobei die Gegenform (30) und der Keil (32, 33) so eingerichtet sind, dass sich der Keil senkrecht in Richtung der radialen Wand (22, 23) des Trägers (20) verlagert, wenn das Gegenmodul (30) in Richtung des zylindrischen Teils (21) verlagert wird.

3. Verfahren nach Anspruch 2, dessen Keil (32, 33) eine zweite Wand (32b, 33b) mit komplementärer Form zu dem Wandteil des Trägers des zylindrischen Teils (21) neben dem des radialen Teils (22, 23) aufweist.

4. Verfahren nach Anspruch 2 oder 3, dessen Keil einen Wandabschnitt (32c, 33c) mit gerundetem Querschnitt zwischen der ersten (32a, 33a) und zweiten Wand (32b, 33b) aufweist.

5. Verfahren nach Anspruch 3, gemäß dem man ein Metallblatt (40) unter der zweiten Wand derart anordnet, dass das Gleiten des Keils auf der Faserstruktur verbessert wird.

6. Verfahren nach Anspruch 4, wobei der zentrale Teil (31) der Gegenform einen Wandteil (31a) umfasst, der in Bezug auf die Achse schräg ist, wobei der Keil (32, 33) eine dritte Wand (32d, 33d) umfasst, die in Bezug auf die Achse schräg ist, wobei die Wandteile (31a; 32d, 33d) miteinander derart in Berührung kommen, dass das Gleiten des Keils in Richtung der radialen Wand sichergestellt wird, wenn die Gegenform in Richtung des zylindrischen Teils verlagert wird.

7. Verfahren nach einem der vorhergehenden Ansprüche, dessen Gegenform aus mindestens zwei Zylindersektoren ausgebildet ist.

8. Verfahren nach einem der vorhergehenden Ansprüche, dessen Träger einen zylindrischen Teil und zwei Wände umfasst, die radial in Bezug zu beiden Seiten des zylindrischen Teils ausgerichtet sind.

9. Verfahren nach einem der vorhergehenden Ansprüche, gemäß dem die Gegenform der Oberfläche der Form derart angenähert wird, dass die Faserstruktur kompaktiert und die Stärke dieser Letzteren sowohl senkrecht zu der Oberfläche des Trägers als auch zu der der seitlichen Flanschen kompaktiert wird.

10. Verfahren nach einem der vorhergehenden Ansprüche, das an die Herstellung eines Turbomaschinengehäuses angewandt wird.

## Claims

1. A method for manufacturing an article made of composite material formed with a polymer matrix reinforced by a fibrous structure, comprises the following steps of positioning the fibrous structure (10) on a support (20) forming a moulding surface, covering with a counter mould (30) and compacting said structure through bringing the surface of the counter mould closer to that of the support, then of injecting of the polymer matrix in said fibrous structure, **characterized in that**, the support (20) comprising a cylindrical part (21) and a wall (22, 23), radially oriented with respect to the cylindrical part (21), the counter mould comprises two parts (31, 32 or 33) able to move one relative to the other in direction respectively one towards the axis of the cylindrical part (21) and the other towards the radial wall (22, 23) of the support (20).

2. A method according to claim 1 wherein the counter mould (30) comprises a main part (31) having a shape complementary to that of the cylindrical part (21) of the support (20) and a corner (32, 33) with a first wall (32a, 33a) having a shape complementary to that of the radial wall (22, 23) interposed between said main part (31) of the counter mould and said radial wall (22, 23) of the support (20), the counter mould (30) and the corner (32, 33) being arranged so that the corner moves perpendicularly in direction towards said radial wall (22, 23) of the support (20) when the counter mould (30) moves in a direction towards the cylindrical part (21).

3. A method according to claim 2, wherein the corner (32, 33) has a second wall (32b, 33b) having a shape complementary to the wall portion of the support of the cylindrical part (21) adjacent to that of said radial wall (22, 23).

4. A method according to claim 2 or 3, wherein the corner has a wall portion (32c, 33c) with a rounded section between said first (32a, 33a) and second (32b, 33b) walls.

5. A method according to claim 3, wherein a metal sheet (40) is provided under said second wall so as to improve sliding of the corner on the fibrous structure.

6. A method according to claim 4, wherein the central part (31) of the counter mould comprises a wall portion (31a) slanted with respect to said axis, the corner (32, 33) comprises a third wall (32d, 33d) slanted with respect to said axis, said wall portions (31a; 32d, 33d) coming into contact with relative to the other, so as to ensure sliding of the corner in the direction towards said radial wall when the counter mould is moved in the direction towards the cylindrical part.

7. A method according to one of the previous claims, wherein the counter mould is formed with at least two cylinder sectors.

8. A method according to one of the previous claims, wherein the support comprises a cylindrical part and two walls radially oriented on both sides of the cylindrical part.

9. A method according to one of the previous claims, wherein the counter mould is brought closer to the surface of the mould so as to compact the fibrous structure and reduce the thickness of the latter both perpendicularly to the surface of the support and to that of the side flanges.

10. A method according to one of the previous claims, applied to manufacturing a turbo-machine casing.
